# NEUE EUROPÄISCHE PATENTSCHRIFT

(11) **EP 1 078 116 B2**
(45) Veröffentlichungstag und Bekanntmachung des Hinweises auf die Entscheidung über den Einspruch: **12.07.2006**
(45) Hinweis auf die Patenterteilung: 26.03.2003
(21) Anmeldenummer: 99920514.9
(22) Anmeldetag: 12.05.1999
(51) Int. Cl.: D01G 15/64, D01G 19/26, D01G 21/00, B65H 54/80

(54) **TEXTILMATERIAL VERARBEITENDE MASCHINE MIT EINEM STRECKWERK**
MACHINE FOR PROCESSING A TEXTILE MATERIAL AND COMPRISING A DRAWING SYSTEM
MACHINE TRAITANT UNE MATIERE TEXTILE ET DOTEE D'UN BAC D'ETIRAGE

(30) Priorität: 13.05.1998 CH 106398; 29.05.1998 CH 118298
(43) Veröffentlichungstag der Anmeldung: 28.02.2001
(60) Teilanmeldung: 03006664.1
(73) Patentinhaber: MASCHINENFABRIK RIETER AG, 8406 Winterthur (CH)
(72) Erfinder: SLAVIK, Walter, CH-8320 Fehraltorf (CH); PIETRINI, Viktor, CH-8372 Wiezikon b. Sirnach (CH); NÄF, Beat, CH-8645 Jona (CH); FAAS, Jürg, CH-8450 Andelfingen (CH); MÜLLER, Christian, CH-8400 Winterthur (CH)
(74) Vertreter: Schlief, Thomas P.
(86) Internationale Anmeldenummer: PCT/CH1999/000201
(87) Internationale Veröffentlichungsnummer: WO 1999/058749

(56) Entgegenhaltungen:
- EP-A- 0 312 774
- EP-A- 0 376 002
- EP-A- 0 446 796
- EP-A- 0 478 992
- EP-A- 0 626 427
- EP-A- 0 627 509
- EP-A- 0 678 601
- EP-A- 0 799 916
- EP-A- 0 803 596
- WO-A-92/05301
- WO-A-98/32903
- DE-A- 4 302 075
- DE-A- 19 609 781
- DE-A- 19 721 758
- DE-U- 29 622 923
- JP-A- 60 155 730
- US-A- 4 768 262
- US-A- 5 535 488
- PATENT ABSTRACTS OF JAPAN vol. 9, no. 324 (C-320), 19. Dezember 1985 (1985-12-19) & JP 60 155730 A (HOWA KOGYO KK), 15. August 1985 (1985-08-15)

## Beschreibung

Die Erfindung bezieht sich auf eine Karde nach dem Oberbegriff des Anspruch 1

Bekannt sind sogenannte Strecken zum Doublieren und Verstrecken von Faserbändem, die durch Karden bzw. Kämmaschinen hergestellt werden können. Die wesentliche Baugruppe einer solchen Maschine ist das Streckwerk. Beispiele solcher Strecken sind in DE-A-195 48 840, EP-A-688 502, DE-A-44 24 490 und DE-A-41 42 038 zu finden. Das "Doublieren" bedeutet, dass solche Maschinen zum Einziehen und Verarbeiten von mehreren Faserbändern (z.B. sechs oder acht Bändern) konzipiert sind, wobei der Gesamtverzug des Streckwerkes normalerweise der Anzahl der einlaufenden Faserbändern angepasst ist.

Die vorliegende Erfindung sieht eine Karde mit einem Streckwerk und einer Bandablage vor, wobei das Streckwerk durch eine Baugruppe einer Strecke für das Doublieren und Verstrecken von mehreren Faserbändern gebildet ist. Sofern es sich bei der Textilmaschine um eine Karde handelt, wird In diesem Fall nur ein der Strecke zugeführt.
Damit wird die Integration einer bisher autonom arbeitenden Strecke an einer ebenfalls bisher autonom arbeitenden Karde vorgeschlagen

Das der Baugruppe zugeornete Streckwerk kann mit der normalen Infrastruktur der Strecke versehen werden, z.B. das Gestell und die Antriebs- bzw. Bedienungseinrichtungen. Das Kannengatter der konventionellen Strecke kann durch eine Übergabeeinrichtung ersetzt werden, welche das von der Textilmaterial verarbeitenden Maschine (kurz: Textilmaschine genannt) gelieferte Fasermaterial an das weitere Streckwerk weiterleitet.

Ein modernes Antriebssystem für eine Textilmaschine beruht auf der Frequenzumformertechnik - siehe zum Beispiel "Drehstrommotoren mit Frequenzumrichtern für Textilmaschinen" (Textil Praxis International 1992, Januar, Seite 37,38).
Ein solcher Antrieb ist z.B. für eine Karde in der DD-A-224626 gezeigt, wobei in dem Fall mehrere Umrichter (Einzelumrichter) verwendet werden. Gemäss EP-A-671 355 stellte es sich heraus, dass solche Antriebssysteme erweitert werden können, um die Bandablage miteinzubeziehen, obwohl in der Bandstrecke zwischen der Maschine und der Bandablage Fehlverzüge besonders leicht erzeugt werden können.

Gemäss einer Ausführung dieser Erfindung weist das Streckwerk in der ersten Variante einen vorgegebenen (allenfalls einstellbaren) Verzug auf, wobei sowohl der Antrieb für die Textilmaschine, wie auch der Antrieb für das Streckwerk mindestens je einen frequenzgesteuerten Drehstrommotor aufweisen. Dabei ist zum Speisen dieser Motoren ein gemeinsamer Frequenzumrichter oder ein Frequenzumrichterpaarvorgesehen, wobei die Umrichter eines Paares miteinander gekoppelt sind, um die gleiche Ausgangsfrequenz bzw. Ausgangsfrequenzen in einem vorgebbaren Verhältnis vorzuweisen. Die Drehstrommotoren sind können vorzugsweise Asynchronmotoren sein, d.h. Motoren, die wegen Schlupf eine lastabhängige Drehzahlcharakteristik bei konstanter Speisefrequenz aufweisen. Eine solche Charakteristik ist (trotz des Risikos eines Fehlverzuges) deshalb verwendbar, weil es sich herausstellt, dass die zu erwartenden Laständerungen im Betrieb derart ähnliche Verhaltensweisen an den massgebenden Stellen aufweisen, dass die Differenz der relativen Drehzahlfehler (d.h. der Drehzahlunterschied gegenüber den Synchrondrehzahlen) in der Praxis innerhalb sehr engen Grenzen (akzeptablen Toleranzen) bleibt.

Es kann dementsprechend ein Antriebssystem für eine Faserbandherstellende und weiterverarbeitende Textilmaschine vorgesehen werden, wobei sowohl die bandliefemden Elemente wie auch die verarbeitenden Elemente durch Motoren angetrieben werden, die eine lastabhängige Drehzahlcharakteristik aufweisen. Das Antriebssystem umfasst vorzugsweise eine Motorensteuerung, die derart ausgelegt ist, dass allfälliger, im Betrieb entstehender Motorenschlupf innerhalb vorgebbaren Grenzen bleibt. Die Steuerung weist vorzugsweise einen steuerbaren Leistungsteil auf, welcher die genannten Motoren speist. Der Leistungsteil ist vorzugsweise bezüglich der Frequenz der dadurch gelieferten elektrischen Energie steuerbar, er umfasst zum Beispiel mindestens einen Frequenzumrichter, und die genannten Motoren sind dann vorzugsweise über die Speisefrequenz steuerbare Motoren.
Aus Kostengründen wird man normalerweise Drehstromasynchronmotoren (Kurzschlussläufermotoren) wählen, wobei die Verwendung von anderen, über die Speisefrequenz steuerbaren Motoren (z.B. Reluktanzodersogar Synchronmotoren) nicht ausgeschlossen ist.
Der bevorzugte Motorentyp ist der sogenannte Getriebemotor. Die effektive Drehzahl eines solchen Motors wird sowohl durch die Speisefrequenz wie auch durch die Über- bzw. Untersetzung des dem Motor zugeordneten Getriebes beeinflusst. Das Getriebe kann Wechselstellen umfassen, so dass die effektive Drehzahl bei gegebener Speisefrequenz eingestellt werden kann. Das Gesamtsystem ist aber vorzugsweise derart angeordnet, dass keine Wechselstellen erforderlich sind.

Der Antrieb für das Streckwerk kann mehrere Motoren umfassen. Es kann aber im Antrieb des Streckwerkes nur ein einziger Motor vorgesehen werden, wobei dann eine mechanische Übertragung der Motorenleistung an verschiedene Elemente des Streckwerkes erforderlich wird.

Die Erfindung sieht eine Karde bzw. Kardiereinrichtung vor, mit einer einzigen faserbandbildenden Einrichtung aus Erzeugung eines Faserbandes, mit einer Bandablage und mit einem Streckwerk zum Verstrecken nur des einzig gebildeten Faserbandes, wobei das Streckwerk zwischen der bandbildenden Einrichtung und der Bandablage angeordnet ist und wobei dem Streckwerk das in der faserbandbildenden Einrichtung erzeugte Faserband zugeführt wird, wobei das Streckwerk durch eine Baugruppe einer Strecke zum Doublieren und Verstrecken von mehreren Faserbändern gebildet ist.

Dabei wird weiterhin vorgeschlagen, dass die Baugruppe ein Streckwerk mit einer Liefergeschwindigkeit höher als 400 m/min umfasst.

Vorteilhafterweise wird vorgeschlagen, das Streckwerk der Baugruppe als Vergleichmässigungsaggregat auszubilden. D.h. das Streckwerk ist mit einer Regulier- oder Steuereinrichtung versehen, um die Bildung eines gleichmässigen Faserbandes zu gewährleisten.
Der Vorlagetisch der Strecke kann mit einem Bandleitelement für ein einziges Faserband ausgestattet sein.

In der Karde sind gegenwärtig mit Liefergeschwindigkeiten zwischen 10 M/min und 300 M/min zu rechnen. Der Faserbandtiter liegt normalerweise im Bereich 3,5 bis 6,5 ktex. Die Antriebsmotoren der bandliefernden Elemente der Karde (des Auslaufes) weisen Drehzahlen zwischen 150 und 4500 U/min bei Speisefrequenzen zwischen 5 und 150 Hertz auf. Die erforderliche Ausgangsleistung eines Frequenzumrichters, um sowohl den Kardenauslauf wie auch das Streckwerk mit Energie zu versorgen, liegt im Bereich 1,5 bis 3 kWatt.

Die Erfindung befasst sich auch mit der Verbesserung des Faserorientierungsgrades bzw. der Verminderung der Anzahl der Faserhaken (Faserhäkchen) im Kardenband. Der Begriff "Kardenband" bedeutet hier ein Faserband, das in eine der Karde nachfolgende Bandablage geliefert wird.

### Stand der Technik:

Die Bedeutung des Faserorientierungsgrades und die Probleme, die aus der Bildung von Faserhaken in der Karde entstehen, sind im Fachbuch "Verkürzte Baumwollspinnerei; Faserband-Spinnverfahren"(Herausgeber: "Zeitschrift für die gesamte Textilindustrie", 1965) von Prof. Dr. W. Wegener und Dr. H. Peuker erklärt worden (Seite 82 ff, siehe aber insbesondere Seiten 87 bis 97). Daraus wird klar, dass die Verwendung eines Streckwerkes zur Verbesserung des Faserorientierungsgrades im Kardenband bekannt ist (Seite 87/88: Kapitel "Karden-band-Verzugsaggregate", siehe auch Seite 72 - "Graf-Optima Kardenband-Vergleichmässigungsaggregat"). Mittlerweile sind weitere Vorschläge für die Verwendung eines Streckwerk am Auslauf der Karde vorgelegt worden (siehe z.B. u.a. US-C-4,100,649; US-C-3,703,023; Textile Asia, Juni 1989, Seite 20; CH-C-462 682; US-C-4,768,262; US-C-5,152,033; US C-4,947,947; US-C-5,400,476; US-C-5,274,883; US-C-5,018,248; DE-A-22 30 069; EP-A-512 683).

Seit der Erscheinung des erwähnten Fachbuches ist das Interesse am Direktverspinnen von Karden-band (ohne dazwischenliegende Streckenpassagen) sogar gestiegen, weil ein derartiges Verfahren durch den Erfolg des Rotorspinnens (ab 1970) begünstigt wurde - vgl. DE-A-40 47 719. Trotzdem ist es bisher nicht gelungen, das Direktverspinnen von Kardenband (ohne eine Streckenpassage) auch mittels des Rotorspinnverfahrens zu realisieren.

Mit anderen Worten ist es bisher bekannt, Kardenband (in einer Kanne) abzulegen, das Faserband mindestens einmal (aus der Kanne) abzuziehen und zu verstrecken, um das Orientierungsgrad zu erhöhen, wonach die Fasern (allenfalls nach weiteren Verarbeitungsschritten) versponnen werden können. Beim derartigen Verstrecken wird insgesamt keine Verfeinerung der Vorlage angestrebt - es werden z.B. sechs (oder acht) Faserbändern zu einem Vlies vereinigt, das anschliessend einem sechsfachen (bzw. achtfachen) Verzug unterworfen wird.

Die Erfindung sieht ein Verfahren zur Bildung eines Kardenbandes vor, wonach ein Kardenvlies zu einem Faserband zusammengefasst, das Faserband verstreckt und das verstreckte Band abgelegt wird, dadurch gekennzeichnet, dass das Faserband beim Verstrecken mittels eines Streckwerkes für das Doublieren von Faserbändern einem derart hohen Verzug unterworfen wird, dass das Faserorientierungsgrad wesentlich erhöht bzw. den Anteil der Hakenfasem wesentlich verkleinert wird.
Insbesondere kann das dem Ablegen vorgeschalteten Verstrecken des Faserbandes (z.B. mittels des genannten Streckwerk) dazu verwendet werden, den Anteil der Schlepphaken (vgl. das Fachbuch "Verkürzte Spinnerei", Seite 90) wesentlich zu reduzieren.

Dazu ist es zweckmässig, das Faserband einen Verzug von mehr als 2 und vorzugsweise mehr als 3 zu unterwerfen. Wenn möglich, sollte ein Verzug von 5 bis 6 verwendetwerden, was sich aber nurselten zwischen dem Kardenauslauf und der anschliessenden Bandablage ohne Störungen im Laufverhalten des Faserbandes realisieren lässt.

Um einen derart hohen Verzug zwischen der bandbildenden Einrichtung und der Bandablage zu ermöglichen, sollte die bandbildende Einrichtung vorzugsweise ein Faserband mit einer relativ niedrigen Feinheit (grossen Stärke) erzeugen, z.B. mindestens 8 ktex und vorzugsweise 10 ktex oder sogar mehr (beispielsweise 12 ktex). Um dies zu ermöglichen, wird vorzugsweise mit einer relativ hohen Arbeitsbreite der Karde gearbeitet, z.B. grösser als 1200 mm. Dies kann mit einer Maschine gemäss unserer CH-Patentanmeldungen Nr. 1318/97 vom 3.6.97 realisiert werden.

Alternativen, die keine breite Karden erfordern, sind in EP-A-627 509 und US-C-5,535,488 beschrieben worden.

Die Bandfeinheit nach dem Streckwerk kann z.B. 3 bis 5 ktex betragen. Die Liefergeschwindigkeit am Ausgang des Streckwerks beträgt beispielsweise mehr als 400 m/min. Vorzugsweise wird ein derartiges Streckwerk auf der Bandablage vorgesehen (vgl. das Fachbuch "Verkürzte Baumwollspinnerei, Seite 72 und das darin erwähnte CS-Patent 98 939), so dass das vom Streckwerk gelieferte Faserband möglichst rasch (ohne einen langes Transportweg durchlaufen zu müssen) abgelegt werden kann.

Die Erfindung sieht dementsprechend ein Verfahren vor, wonach ein Kardenvlies zu einem Faserband zusammengefasst und das Band mit einem Verzug von mindestens 2 und vorzugsweise mehr als 3 vor dem Ablegen verstreckt wird, wobei das Verstrekken durch ein Streckwerk für das Doublieren von Faserbändern erfolgt.

Anders ausgedruckt sieht die Erfindung eine Karde mit einer faserbandbildenden Einrichtung, einer Bandablage und einem zwischen der bandbildenden Einrichtung und der Bandablage eingeschalteten Streckwerk vor, wobei das Streckwerk zum Erzeugen eines Verzugs höher als 2 und vorzugsweise höher als 3 gestaltet ist und für das Doublieren von Faserbändern geeignet wäre.

Das Streckwerk kann als Vergleichmässigungsaggregat gebildet werden, d.h. es kann zum Erzeugen eines steuerbar variablen Verzugs angeordnet werden, was aber nicht erfindungswesentlich ist. Verzugsänderungen werden zu entsprechenden Änderungen des Orientierungsgrades führen. Die Karde selbst kann daher zweckmässigerweise als Vergleichmässigungsaggregat gestaltet werden (z.B. nach EP-A-271 115), wobei das anschliessende Streckwerk zum Erhöhen des Faserorientierungsgrades konzipiert ist.

Die vorliegende Erfindung kann beispielsweise in einer Karde realisiert werden, die nach unserer DE-Patentanmeldung Nr. 197 38 053 vom 1.9.97 gebildet ist.

Beispiele der Erfindung werden nun anhand der in den Figuren der Zeichnungen dargestellten Ausführungen in Anwendung an einer Karde oder Kämmaschine näher erklärt. Es zeigt:
- Fig. 1: eine Kopie der Fig. 1 aus EP-A-671 355,
- Fig. 2: eine schematische isometrische Darstellung einer Bandablage für eine Karde nach Fig. 1,
- Fig. 3: eine Kopie der Fig. 1 aus DE-A-195 48 840,
- Fig. 4: eine schematische Darstellung einer Kombination nach der vorliegenden Erfindung
- Fig. 5: eine schematische Darstellung ein Modifikation
- Fig. 5A: eine erweiterte Ausführungsform nach Fig. 5 mit einem elektrischen Drosselglied
- Fig. 5B: eine weitere Ausführung nach Fig. 5A
- Fig. 6: ein Detail aus Fig. 5
- Fig. 7: eine schematische Ansicht einer Karde nach der Erfindung und
- Fig. 8: ein Diagramm zur Erklärung der Ausführung nach Fig. 7
- Fig. 9: eine Anordnung nach der Fig. 1 aus EP-A-349 866,
- Fig. 10: ein Detail der Anordnung nach Fig. 9,
- Fig. 11: eine Anordnung nach der einzelnen Fig. aus EP-A-640 704,
- Fig. 12: eine Modifikation der Anordnung nach Fig. 9, um sie für eine Ausführung nach Fig. 13 vorzubereiten,
- Fig. 13: eine schematische Darstellung einer Ausführung der vorliegenden Erfindung,
- Fig. 14: eine schematische Darstellung einer Modifikation der Anordnung nach Fig. 13
- Fig. 15: ein Detail aus Fig. 14,
- Fig. 16: eine Kopie der Fig. 1 aus EP-A-799 916, und
- Fig. 17: eine schematische Darstellung einer weiteren Ausführung nach der vorliegenden Erfindung.

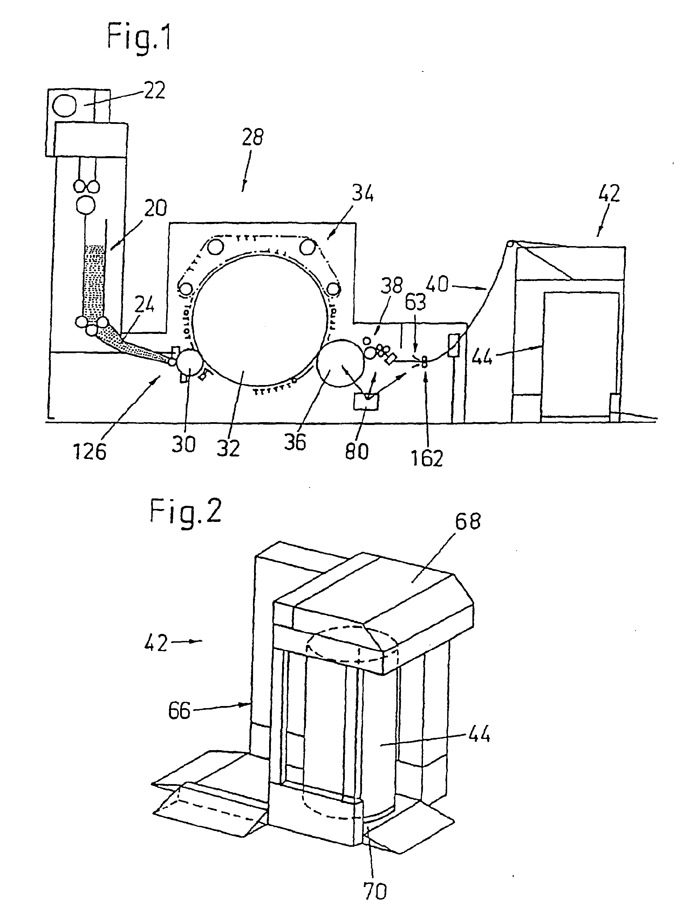

Die in Fig. 1 dargestellte Kardeneinheit umfasst einen Füllschacht 20, der Fasermaterial aus einem schematisch angedeuteten Flockentransportsystem 22 erhält und daraus eine Watte 24 bildet, welche an die Speisevorrichtung 126 der Karde 28 weitergeleitet wird. Die Karde selbst ist konventioneller Bauart mit einem Vorreisser (auch Briseur genannt) 30, einer Trommel (auch Tambour genannt) 32, einem Wanderdeckelgerät 34 und einem Abnehmer 36, der Teil des Auslaufes 38 bildet. Im Kardenauslauf wird ein Faserband 40 gebildet, das an die Bandablage (Kannenpresse bzw. den Kannenstock) 42 geliefert wird, wo das Band in Windungen in einer Kanne 44 abgelegt wird.
Die Bandablage 42 ist eine autonome Maschine mit eigenem Antrieb und kann frei gegenüber der Karde 28 aufgestellt werden. Sie umfasst ein Gestell 66 (Fig. 2) mit einer Kopfpartie 68, einer Fusspartie 70 und einer dazwischen liegenden Kannenaufnahmestation (kein Bezugszeichen). Die wesentlichen Arbeitselemente der Bandablage bestehen aus
- einem Drehteller in der Fusspartie 70,
- einem Trichterrad in der Kopfpartie 68, und
- einem Einzugswalzenpaar oberhalb (oder unterhalb) des Trichterrades.

Die Kanne 44 wird auf den Drehteller gestellt und gegen Rotation gegenüber dem Teller befestigt (nicht gezeigt). Der Drehteller wird vom Bandablagenantrieb um eine senkrechte Achse gedreht, wobei die Kanne 44 mitgenommen wird.

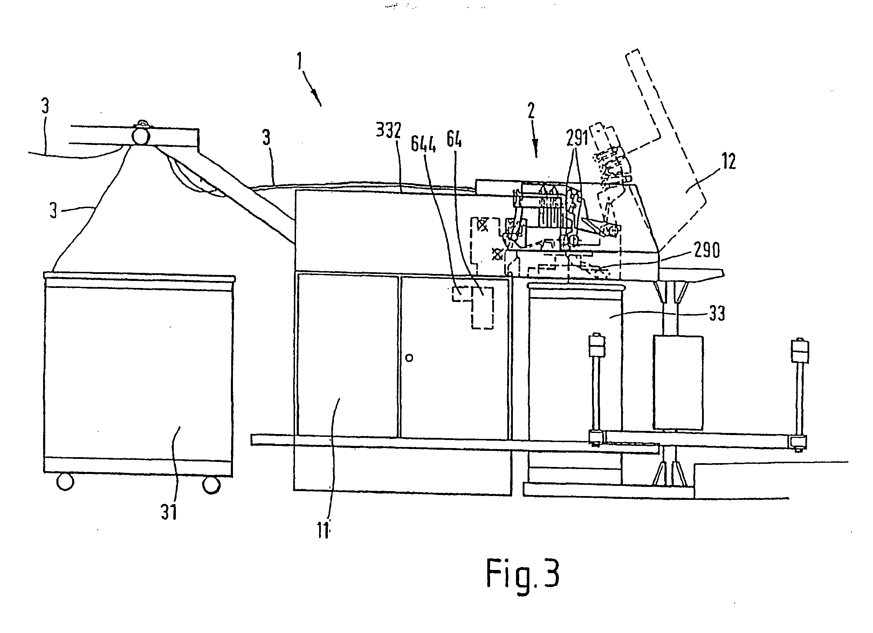

Die Strecke 1 in der Fig. 3 besteht im wesentlichen aus einem Gehäuse 11 zur Aufnahme der Antriebs- und Hilfsaggregate, sowie dem Streckwerk 2 für das Verstrecken und Doublieren der Faserbänder 23. Diese werden Vorlagekannen 31 entnommen und über einen Vorlagetisch 332 der Strecke 1 dem Streckwerk 2 zugeführt. Die Kannen 31 werden z.B. von einer Karde gemäss Fig. 1 geliefert (vgl. Kanne44, Fig. 1). Nachdem das Faserband 23 das Streckwerk verlassen hat, wird es über die Kalanderwalzen 291 in ein Ablagerohr 290 geführt, das teil eines Drehtellers ist, der das Faserband in eine Ablagekanne 33 ablegt. Das Streckwerk 2 ist über eine in Fig. 1 gestrichelt dargestellte Abdeckung 12 gegenüber dem umgebenen Raum abgedeckt. Die Abdeckung 12 beinhaltet im wesentlichen eine Absaugung, die das staubförmige Material, das beim Verstrekken freigesetzt wird, abführt. Die Abdeckung ist vom Streckwerk wegschwenkbar, wobei dies in günstiger Weise gleichsinnig mit den Druckarmen erfolgen kann. Die Unterwalzen des Streckwerkes 2 sind in bekannter Weise über Riementriebe angetrieben. Für weitere Einzelheiten des Streckwerkes wird auf die DE-A-195 48 840 hingewiesen.

Die Arbeitselemente der Strecke sind auf einer derartigen Höhe, dass sie vom Bedienungsperson nicht ohne Hilfsmittel erreichbar sind. Am Gehäuse 11 ist deshalb ein Podest 13 vorgesehen, worauf ein Mensch stehen/gehen kann, um Zugang zum Tisch 332, Abdekkung 12 und Streckwerk 2 zu erhalten. Ein solches Podest wird normalerweise nur an einer Maschinenseite vorgesehen, da auf der anderen Seite sperrige Geräte (Antriebselemente) vorgesehen sind. In der dargestellten Maschine läuft der Materialfluss von links nach rechts von der Bedienungsseite betrachtet.

Die Vorlagekannen 31 sind in einem "Gatter" eingereiht, wobei aus Platzgründen nur eine Kanne 31 in Figur 3 gezeigt worden ist. Es werden normalerweise mindestens vier und vorzugsweise acht Faserbändern aus je einer Kanne entnommen und auf dem Tisch 332 zu einem Vlies zusammengefasst. Dieser Schritt ist z. B. in DE-A-41 42 038 gezeigt. Die Strecke 1 ist dementsprechend zum "Doublieren" (Zusammenlegen) von mehreren Faserbändern 3 konzipiert und entsprechend ausgelegt worden, wobei das Streckwerk 2 zum Verstrecken von einem aus mehreren Faserbändern gebildeten Vlies konstruiert ist. Das Streckwerk 2 weist aber einen derartigen Verzug auf, dass das von ihm gelieferte Faserband die gleiche Durchschnittsfeinheit (Bandnummer) aufweist, wie die einlaufenden Bändern 23, d. h. das Streckwerk erzeugt normalerweise einen Grundverzug von 6 oder 8.

Der Gesamtverzug vom Streckwerk 2 kann fest (vorzugsweise aber einstellbar) vorgegeben werden, wie dies z.B. in der SB-Strecke von Rieter Ingolstadt der Fall ist. In einer Variante kann das Streckwerk 2 als reguliertes Streckwerk gebildet werden, wie dies in der Rieter Ingolstadt RSB-Strecke der Fall ist.

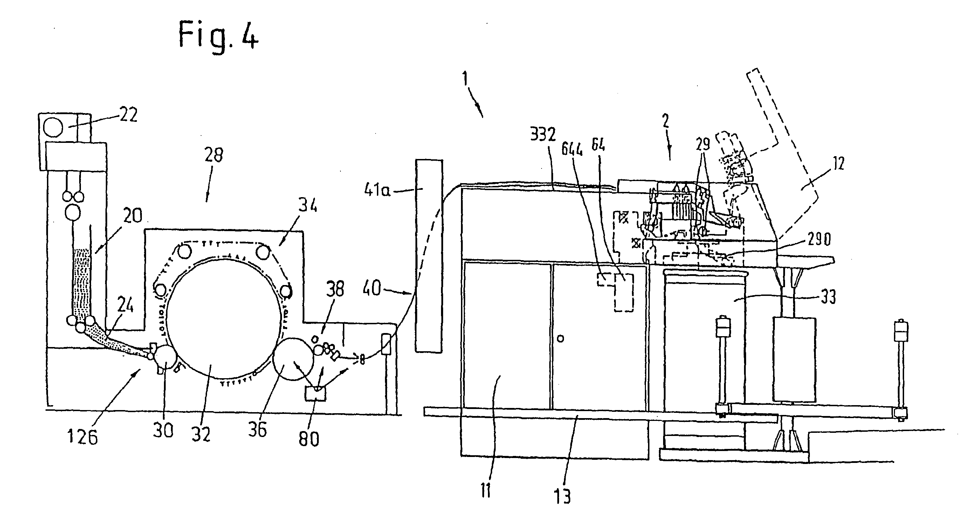

Fig. 4 zeigt nun schematisch eine neue Kombination der Maschinen nach den Figuren 1 und 3, wobei auf die verschiedenen Massstäben der Darstellungen in dieser schematischen Figur nicht geachtet wurde. In dieser Kombination sind die Bandablage 42 der Karde nach Fig. 1 sowie der Kannengatter der Strecke nach Fig. 3 eliminiert worden, wobei anstelle dieses Gatters eine Übergabeeinrichtung (schematisch mit 41 a angedeutet) eingeschaltet worden ist.

Die Karde 34 in der Fig. 4 liefert nach wie vor ein einziges Faserband 40, welches aber nun über den Vorlagetisch 332 an das Streckwerk 2 weitergeleitet wird, ohne vorher in einer Kanne abgelegt werden zu müssen. Das Streckwerk 2 bleibt (im Vergleich zum Streckwerk 2 in der Fig. 3) unverändert, d.h. dieses Streckwerk ist nach wie vor dazu geeignet ein Vlies zu verstrecken, wobei in diesem Fall nur ein einziges Kardenband eingeliefert wird. Die Infrastruktureinrichtungen (z.B. die Antriebe und Absaugeinrichtungen) der Strecke 1 nach Fig. 3 können ebenfalls unverändert bleiben. Dadurch ist es möglich, käufliche Streckwerksmodule an einer Karde anzubauen, ohne ein speziell für die Karde konzipiertes Streckwerk konstruieren und bauen zu müssen. Die Strekke/Bandablage-Einheit ist weitgehend gegenüber der Karde autonom, insbesondere was die Positionierung der Bandablage gegenüber einem alffälligen automatisierten Kannentransportsystem (nicht gezeigt) anbetrifft.

Der Vorlagetisch 332 sollte nun aber mit mindestens einem Bandleitelement (nicht gezeigt) versehen werden, das dazu geeignet ist, eine einziges Faserband über den langen Tisch in die Einlaufwalzen des Streckwerkes 2 einzuführen. Der Tisch kann auch mit einer Einfädelhllfe (nicht gezeigt) versehen werden, um das Einfädeln eines einzigen Bandes zu erleichtern.

Eine Strecke kann meistens beim Kannenwechsel in ihrer Bandablage zum Stillstand gebracht werden, da der Hochlauf bzw. Tieflauf der Walzen eines Streckenstreckwerkes relativ leicht beherrschbar ist. Eine Karde kann beim Kannenwechsel in einer ihr direkt zugeordneten Bandablage (z.B. in der Bandablage 42, Fig. 1) nicht zum Stillstand gebracht werden, da die Walzen einer Karde eine relativ hohen Massenträgheit aufweisen. Die Bandablage einer Karde muss daher zum Ausführen eines "fliegenden Wechsels" ausgelegt werden. Die Bandablage der Strecke 1 in Fig. 4 wird vorzugsweise entsprechend angepasst, um einen fliegenden Wechsel zu ermöglichen. Eine dazu geeignete Bandtrennvorrichtung ist in EP Patentanmeldung Nr. 97810729 gezeigt, wobei diese Anmeldung voraussichtlich am 10 Juni 1998 unter der Nr. EP-A-846 795 veröffentlicht wurde.

Fig. 4 zeigt in der Bandablage eine Spinnkanne mit einem runden Querschnitt. Die Maschinenkombination gemäss Fig. 4 ist aber insbesondere für das sogenannte Direktspinnverfahren wichtig, wonach das vom Streckwerk 2 gelieferte Faserband an eine Endspinnmaschine weiter transportiert wird. Die Endspinnmaschine sollte zum Verspinnen von Faserband mit einer vorgegebenen Bandnummer konzipiert sein, wie dies z.B. für die Rotorspinnmaschine der Fall ist. Insbesondere für das Rotorspinnen ist es oft zweckmässig, runde Spinnkannen durch sogenannte "Flachkannen" zu ersetzen. Dazu geeignete Einrichtungen sind z.B. aus DE-A-42 33 357, DE-A-43 24 951, DE-A-43 24 948, DE-A-44 16 911 und DE-A-44 16 948 entnehmbar. Die Bandablage nach Fig. 4 kann in solchen Fällen durch eine Bandablage für Flachkannen ersetzt werden, wobei diese Modifikation für die Koppelung der Streckenbaugruppe mit der Karde keine Rolle spielt.

Eine Ausführung eines Antriebes für die Karde selbst ist z.B. in der deutschen Gebrauchsmusteranmeldung G 9312638.7 vom 24. August 1993 beschrieben. Der Antrieb umfasst einen Hauptantriebsmotor (nicht gezeigt) für die Trommel 32 (Fig. 1) und das Wanderdeckelgerät 34. Der Hauptantriebsmotor kann zum Beispiel nach EP-A-557 242 ausgeführt werden. Es sind zusätzlich ein Antriebsmotor 80 für den Abnehmer 36 und die anderen Arbeitselemente des Auslaufes 38 bis und mit einem Walzenpaar 162 vorgesehen, wie in Fig. 1 schematisch durch die vom Antrieb 80 ausgehenden Pfeile angedeutet wird. Walzenpaar 162 kann, z.B. nach EP-A-186 741 gebildet werden, um ein von der Bandnummer abhängiges Signal zu erzeugen.
Bezüglich des Antriebs für die Strecke 1, insbesondere für das Streckwerk 2, kann von einem Antrieb nach EP-A-450 043 ausgegangen werden.

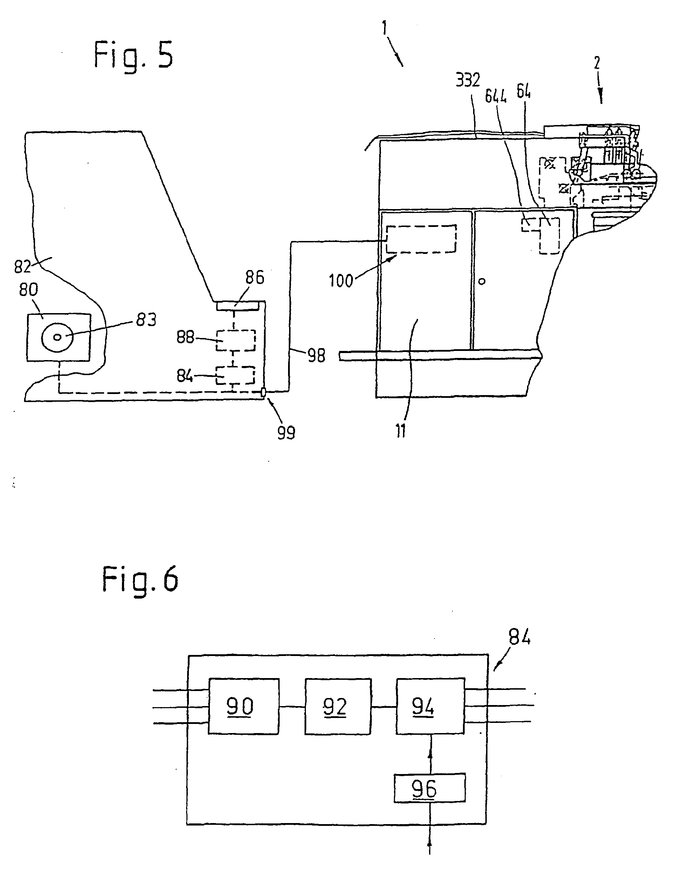

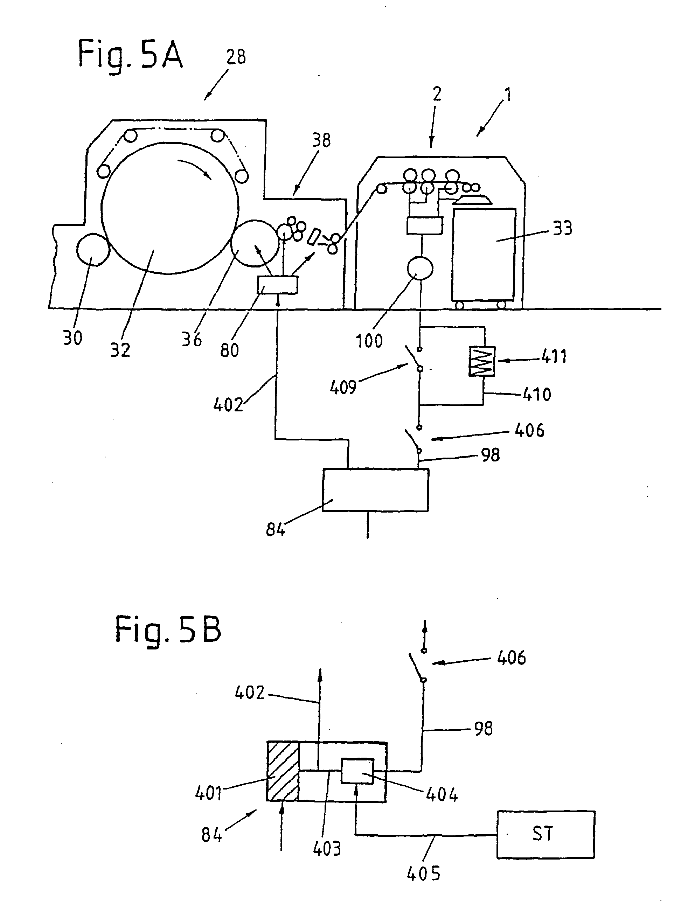

Fig. 5 zeigt nun schematisch eine Variante,
wobei das Bezugszeichen 82 auf die Verschalung der Auslaufpartie der Karde deutet und auf den Antrieb für den Auslauf nochmals mit dem Bezugszeichen 80 hingewiesen wird. In einer kostengünstigen Ausführung umfasst dieser Antrieb 80 einen stufenlos steuerbaren, wartungsfreien Asynchronmotor 83 (z.B. einen Kurzschlussläufermotor), der mittels eines Frequenzumrichters 84 mit elektrischen Energie gespeist wird. Die Ausgangsfrequenz des Umrichters 84 ist über ein Eingabegerät 86 einstellbar, das in einer programmierbaren Steuerungseinheit 88 der Karde integriert ist. Eine solche Anordnung ist heutzutage allgemeiner Stand der Technik für die Karde, d.h. die Elemente 80,83,84,86 und 88 (oder ihre Aequivalente) sind für eine moderne Karde nahezu unerlässlich.

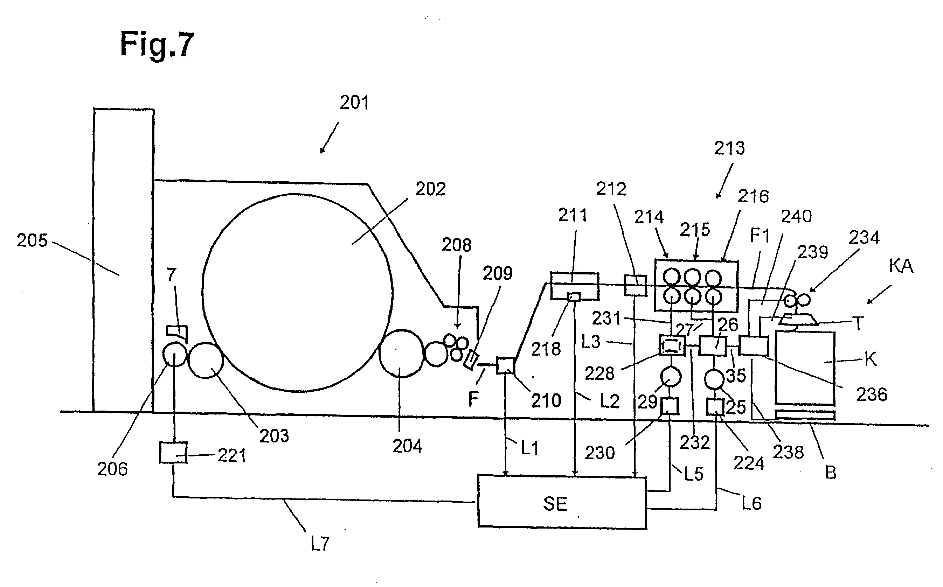

Der Umrichter 84 umfasst normalerweise einen Gleichrichter 90 (Fig. 6), der Wechselstrom von einem 3-Phasen Netz erhält und Gleichstrom an einen Zwischenkreis 92 liefert. Ein steuerbarer Leistungsteil 94 wandelt Gleichstrom aus dem Zwischenkreis 92 in Wechselstrom mit einer Frequenz, die von einer Umrichtersteuerung anhand eines Signals von der Einheit 88 bestimmt wird. Dieses Wechselstrom (einphasig oder dreiphasig) wird dem Motor 83 gespeist.

Die Synchrondrehzahl des Motors 83 wird eindeutig durch die Ausgangsfrequenz des Frequenzumrichters 84 vorgegeben. Die effektive Drehzahl der Motorwelle wird aber nicht allein in Abhängigkeit von dieser Synchrondrehzahl bestimmt. Diese Drehzahl hängt auch von der Last ab, welcher der Motor unterworfen ist, das heisstim Motor 83 entsteht zwischen dem Rotor und dem Stator ein sogenannter "Schlupf". Diese Tatsache allein würde zu gar keinem Problem führen, wenn der Schlupf voraussehbar wäre. In der Praxis ändert sie sich aber kontinuierlich als eine Funktion der momentanen Lastverhältnissen, die nicht genau vorhersehbar sind.

Obwohl der Schlupf nicht kontrollierbar ist, kann das "Schlupfverhalten" (d.h. der Verlauf der Aenderungen des Schlupfes in Abhängigkeit von Laständerungen) sowohl in der Richtung wie auch in der Grössenordnung geschätztwerden. Im wesentlichen handelt es sich in der Auslaufpartie um Reibungsverluste und Verdichtungsarbeit, zum Beispiel als das Faserband durch den Trichter 63
(Fig. 1) gezogen wird. Solche Lastkomponenten sind abhängig vom Bandtiter und Liefergeschwindigkeit. Über einen Liefergeschwindigkeitsbereich bis 300 m/min kann man Asynchronmotoren wählen, die unter diesen Umständen einen Schlupf von maximal 3% aufweisen.

Der Frequenzumrichter 84 wird normalerweise derart ausgelegt werden, dass er zumindest imstande ist, eine Bandablage auch mit der nötigen Energie zu versorgen, dies weil die Karde oft mit einer mit ihr mechanisch gekoppelten Bandablage versehen ist und daher grundsätzlich entsprechend konstruiert werden muss. Es besteht kein Problem daher, die für eine "autonome" Maschine erforderliche Energie über zum Beispiel eine Steckdose 99 der Kardenverschalung 82 vom Ausgang des Umrichters abzuzweigen und über einen Kabel 98 an einen Antriebsmotor 100 der Strecke 1 zu speisen. Der Motor 100 ist ein einfacher Drehstromgetriebemotor, der ähnlich dem Motor 83 direkt anhand der vom Frequenzumrichter erhaltenen Energie gesteuert wird. Der Verzug im Streckwerk 2 ist in diesem Fall fest vorgegeben aber allenfalls einstellbar.

Verzugsänderungen können durch Wechselräder in den Getrieben bewerkstelligt werden. In derbevorzugten Lösung ist kein Wechselrad in dem Getriebe zwischen dem Motor 83 und dem Walzenpaar 162 vorgesehen, da sonst bei einer Aenderung der Ueber- bzw. Untersetzungsverhältnisse an dieser Stelle eine entsprechende Aenderung der verzugsbestimmenden Wechselrädern des Motors 100 durchgeführt werden muss, wenn keine Verzugsänderung vorgesehen ist.

Die Variante ist anwendbar, sofern die Anforderung erfüllt wird, dass das Schluptverhallen des Antriebs für den Maschinenauslauf dem Schlupfverhalten des Streckenantriebs gleich ist. Diese Anforderung kann auch dann erfüllt werden, wenn im Kardenauslauf nicht alle Elemente durch einen einzigen Motor angetrieben werden. Im Normalfall wird aber der Auslaufvom Abnehmer bis zur Lieferung durch nur eine Antriebsquelle in Bewegung gesetzt werden.

In den Fig. 5A und Fig. 5B werden weitere Ausführungen gezeigt, wobei wie in Fig.5 im Detail beschrieben, der Antrieb 80 des Auslaufes 38 der Karde 28 sowie der Antrieb 100 der Strecke über einen gemeinsamen Frequenzumrichter mit elektrischer Energie versorgt werden.
Der Antrieb der Strecke (z.B. bei Verwendung eines Asynchronmotors) benötigt einen sehr hohen Einschaltstrom bis er auf eine entsprechende Drehzahl hochgefahren ist. Gelegentlich muss die Machinenkombination Karde/Strecke heruntergefahren werden, um z.B. einen Sortimentswechsel oder Wartungsarbeiten durchzuführen. Es kann auch vorkommen, dass nur die Strecke heruntergefahren wird, um ein neues Faserband, das von der Auslaufpartie der Karde geliefert wird wieder bei der Streckwerkseinheit 2 anzusetzen. Beim wieder Hochfahren der Maschinenkombination, oder auch nur von der Strecke, kann es vorkommen, dass durch die plötzliche Zuschaltung des Antriebes 100 der Strecke 1 eine Überlastung des gemeinsamen Frequenzumrichter 84 auftritt, wodurch der Frequenzumrichter ausfällt und somit auch der Antrieb des Auslaufes 38 der Karde 28 unterbrochen wird.
Um dies zu verhindern, wird vorgeschlagen, in die Übertragungsleitung 98 ein elektrisches Drosselglied 411 einzubauen, um die Stromzufuhr zum Antrieb 100 auf einen bestimmten Wert zu begrenzen, der gewährleistet, dass keine Stromspitzen auftreten, die zu einem Ausfall des Frequenzumrichter führen.
Beim Hochstarten von der Strecke 1 wird der Schalter 406 geschlossen und der Antrieb 100 über die Strompfade 406 und 410 sowie über das elektrische Drosselglied 411 versorgt. Der parallel zur Drossel angeordnete Schalter 409 bleibt während der Hochlaufphase geöffnet. Sobald die Hochlaufphase abgeschlossen ist und die Streckwerkseinheit 2 eine bestimmte Drehzahl erreicht hat, kann der Schalter 409 geschlossen werden, wodurch die Stromzufuhr nun direkt über die Leitung 98 unter Umgehung der Drossel 411 erfolgen kann.
In Fig.5B wird ein weitere Ausführung gezeigt, wobei anstelle des Drosselgliedes 411 ein Element 404 zur Begrenzung der Stromabgabe direkt im gemeinsamen Frequenzumrichter 84 integriert ist. Dieses Element 404 wird über die Leitung 405 von einer Steuereinheit ST und entsprechend der Hochlaufphase gesteuert, um eine Überlastung des Umrichterelementes 401 zu unterbinden. Das Umrichterelement 401 ist über die Leitung 403 mit dem Element 404 verbunden. Die Stromenergie zum Antrieb 80 wird ebenfalls von der Leitung 403 abgenommen und über die Leitung 402 übertragen.
Mit den in Fig.5A und Fig.5B gezeigten Einrichtungen wird ein störungsfreies Hochfahren der Streckwerkseinheit gewährleistet. Die Anwendung einer derartigen Einrichtung ist auch bei anderen Maschinenkombinationen (z.B. Kämmaschine/Strecke) möglich, sofern eine Koppelung deren Antriebe über einen gemeinsamen Frequenzumrichter erfolgt.

In Fig. 7 wird schematisch eine Karde 201 gezeigt, die mit einer Trommel 202 versehen ist. Das über einen schematisch gezeigten Speiseschacht 205 zugeführte Fasergut gelangt über eine Speisewalze 206 und einen Vorreisser 203 zur Trommel 2. Oberhalb der Speisewalze 206 ist eine Speisemulde 207 angeordnet. Die Speisemulde 207 kann, wie an sich bekannt, beweglich angeordnet sein und dient gleichzeitig als Sensor zur Erfassung von Material-ungleichmässigkeiten bezüglich der gelieferten Materialmenge. Anhand dieses Signals kann die Zufuhr des Materialgutes vom Speiseschacht gesteuert werden. Über einen Abnehmer 204 werden die durch die Trommel 202 aufgelösten Fasern abgenommen, welche das Gut an nachfolgende Vliestransportwalzen 208 übergibt.

Das von den Transportwalzen 208 transportierte und weiterbeförderte Faservlies wird z.B. auf ein Querförderband 209 abgegeben. Durch den seitlichen Abtransport, bzw. das seitliche Abziehen des Faservlieses über das Querförderband 209 wird ein Faserband F gebildet. Zur Bildung dieses Faserbandes F, das am Ende des Querförderbandes 209 umgelenkt werden muss, werden nicht gezeigte Umlenkhilfen, bzw. Trichterelemente verwendet. Das Faserband F, auch Kardenband genannt, wird anschliessend durch einen Sensor 210 geführt, der die Faserbandmasse (Ist-Wert) ermittelt und über eine Leitung L1 an eine Steuereinheit SE abgibt. Der Sensor 210 dient dabei im wesentlichen zur Erfassung von langweiligen Veränderungen, bzw. zur Erfassung von Abdriftungen in der Faserbandmasse von einem vorgegebenen Sollwert. Anhand des vom Sensor abgegebenen ist-Signals und in Vergleich mit einem in der Steuereinheit SE abgelegten Soll-Wert wird, wenn notwendig, ein Steuerimpuls erzeugt, der über die Leitung L7 an den Antrieb 221 der Speisewalze 206 zur Steuerung überführt wird. Durch diese Nachregulierung des Antriebs 221, bzw. die Änderung der Drehzahl der Speisewalze 206 können die vom Sensor 210 ermittelten Massenabweichungen zeitverzögert ausreguliert werden.

Das den Sensor 210 durchlaufende Faserband F gelangt in einen schematisch dargestellten Faserbandspeicher 211, der als Puffersektor für das Faserband zum Ausgleich von Unterschieden in der Fördergeschwindigkeit des Faserbandes zwischen der Abgabe der Karde und einem nachfolgenden Regulierstreckwerk 213 dient. Der Faserbandspeicher 211 ist mit einem Überwachungssensor 218 versehen, der über die Leitung L2 ein Signal an die Steuereinheit SE abgibt. Bevor das von dem Speicher 211 abgegebene Faserband F in das Regulierstreckwerk 213 gelangt, wird es von einem Sensor 212 abgetastet, der die dabei ermittelten Werte über die Leitung L3 an die Steuereinheit SE abgibt.

Das Streckwerk 213 besteht im gezeigten Beispiel aus drei hintereinander geschalteten Walzenpaaren 214,215 und 216, wobei in der dargestellten Ausführung das Eingangswalzenpaar 214 zur Ausregulierung von Massenschwankungen im Faserband in der Drehzahl veränderbar angetrieben wird. In einer bevorzugten (nicht gezeigten) Variante wird das Ausregulieren durch Verzugsveränderungen im Hauptverzugsfeld (zwischen den Walzen 215 und 216) durchgeführt. Die Erklärung anhand der dargestellten Ausführung gilt aber sinngemäss auch für die bevorzugten Variante.

Das Lieferwalzenpaar 216 wird über einen Hauptmotor 25 und ein nachfolgendes Getriebe 26 mit einer konstanten Geschwindigkeit angetrieben. Wie durch den Antriebsstrang 27 schematisch angedeutet, kann auch das mittlere Walzenpaar 215 mit einer konstanten Geschwindigkeit angetrieben, um ein konstantes Drehzahlverhältnis zu den nachfolgenden Lieferwalzen 216 aufzuweisen. Durch das vorgegebene Drehzahlverhältnis wird ein konstanter Verzug des Faserbandes zwischen den Walzenpaaren 215 und 216 durchgeführt. Der Motor 25 wird über einen Frequenzumrichter 224 und über die Leitung L6 von der Steuereinheit SE gesteuert. Über die Antriebsverbindung 232 wird ein Differentialgetriebe 228 angetrieben, das über den Antriebsstrang 231 das Eingangswalzenpaar 214 antreibt. Der Antrieb des Differentials 228 kann durch einen Regelmotor 29, der über den Frequenzumrichter 230 und die Leitung L5 über die Steuereinheit SE angesteuert wird, übersteuert werden. Diese Übersteuerung erfolgt anhand der von dem Sensor 212 abgegebenen Signale, die mit einem in der Steuereinheit SE abgelegten Soll-Wert verglichen werden.

Im Anschluss an das Regulierstreckwerk 213 ist einen Kannenablage KA angeordnet, bei welcher das von dem Streckwerk abgegebene Faserband F1 über ein Kalanderwalzenpaar 234 und ein Trichterrad T in eine Kanne K abgelegt wird. Die Kanne K steht dabei auf einem angetriebenen Kannenteller B, der die Kanne K während dem Befüllvorgang in Drehung versetzt. Der Kannenteller B wird über den Antriebspfad 238 von einem Getriebe 236 angetrieben. Über den Antriebspfad 240 und 239 werden die Kalanderwalzen 234 und das Trichterrad T ebenfalls von diesem Getriebe 236 angetrieben. Das Getriebe 236 erhält seinen Antrieb über die schematisch gezeigte feste Antriebsverbindung 35 des Getriebes 26, das von dem Hauptmotor 25 angetrieben wird. Daraus ist zu entnehmen, dass das Lieferwalzenpaar 216 mit den Antriebselementen der Kannenablage KA direkt über das Getriebe 26 miteinander fest gekoppelt sind. Das heisst, sobald das Getriebe 26 durch den Motor 25 mit einer geringeren Drehzahl angetrieben wird, sinkt einerseits die Basisdrehzahl der Walzenpaare 214,215 und 216 und andererseits gleichzeitig die Drehzahl der Kalanderwalzen 234 des Trichterrades T und des Kannentellers B der Kannenablage KA.

Das von der Karde 201 über das Querförderband gebildete und gelieferte Faserband F wird durch einen Sensor 210 erfasst und dessen Masse gemessen. Die gemessenen Werte werden zur Steuereinheit SE übertragen, worin sie mit einem Soll-Wert verglichen werden. Weicht der dabei ermittelte Ist-Wert vom Soll-Wert ab, so wird einerseits über die Leitung L7 an den Antrieb 221 der Speisewalze 206 ein Steuerungssignal zur Nachregulierung der Drehzahl gegeben. Gleichzeitig wird dieses Signal auch für die Nachregulierung der Basisdrehzahl des Motors 25 verwendet, um die zu erwartenden Auswirkungen durch den Regeleingriff im Regulierstreckwerk 213 bereits so auszugleichen, so dass dieser keinen wesentlichen Einfluss auf den Füllgrad des vorgeschalteten Band-speichers 211 ausübt. Als Zusatzsignal zur Verstellung der Basisdrehzahl kann auch das Signal des Füllstandssensors des Bandspeichers herangezogen werden. Dabei kann die Steuerung so eingestellt sein, dass das Signal des Füllstandsensors nur dann zusätzlich zur Beeinflussung der Basisdrehzahl herangezogen wird, wenn sich dieser ausserhalb eines vorgegebenen Toleranzbereiches befindet. Dadurch erhält man eine zusätzliche Sicherheit in bezug auf die Funktion des ersten Sensors am Auslauf der Karde. Befindet sich das Signal des Füllstandssensors fortwährend ausserhalb seines vorgegebenen Toleranzbereiches, so ist die Funktion des ersten Sensors zu überprüfen. Da der Regeleingriff bei der Speisewalze 206 erst relativ spät und zeitverzögert zur Auswirkung kommt, muss die vom Sensor 210 ermittelte Abweichung der Masse von einem Soll-Wert voll durch das nachfolgende Regulierstreckwerk 213 ausgeglichen werden.

In dieser Ausführung bildet der Bandspeicher 211 eine Übergabevorrichtung 41 nach Fig. 4.

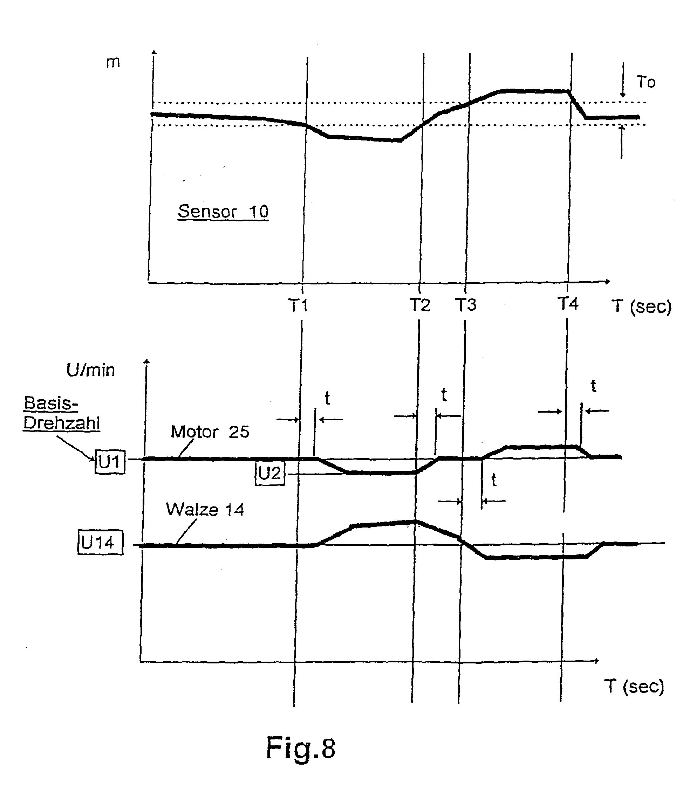

Der Ausgleich wird nun anhand der Diagramme, welche in Fig. 8 gezeigt sind, näher erläutert. Ausgehend von einer Basis- bzw. Betriebsdrehzahl U1 wird zum ZeitpunktT1 über den Sensor 210 ein Abdriften der Masse m ausserhalb eines vorgegebenen Toleranzbereiches To festgestellt. Würde nun das Abdriften der Masse im Zeitpunkt T1 ohne Eingriff in die Basisdrehzahl erfolgen, so wäre der Vorgang wie folgt: Aufgrund der dem Streckwerk 213 vorgelegten geringeren Masse muss der Verzug zwischen den Walzenpaaren 214 und 215 herabgesetzt werden. Das heisst, über den Regelmotor 29 und das Differential 228 wird die Drehzahl des Eingangswalzenpaares 214 erhöht, wodurch gleichzeitig der Verzug zwischen den Walzenpaaren 214 und 215 verringert wird, da die Drehzahl des Walzenpaares 215 konstant bleibt. Durch die Verringerung der Drehzahl des Eingangswalzenpaares 214 wird auch die Einzugsgeschwindigkeit des gelieferten Faserbandes F verringert. Da die Karde bzw. die Abnehmerwalze mit konstanter Geschwindigkeit betrieben wird, bleibt die ursprüngliche Liefergeschwindigkeit des Faserbandes von der Karde gleich. Der hierdurch entstandene Unterschied zwischen der Liefergeschwindigkeit der Karde und der geänderten Einzugsgeschwindigkeit des Faserbandes beim Streckwerk 213 wird durch den Faserbandspeicher.211 aufgefangen. Das heisst, die überschüssig gelieferte Menge an Faserband F füllt den Faserbandspeicher 211 solange auf, bis wieder gleiche Verhältnisse zwischen der Abgabegeschwindigkeit bei der Karde und der Einzugsgeschwindigkeit beim Streckwerk vorhanden sind. Dieser Ausgleich kann dann wieder herbeigeführt werden, sobald der Regeleingriff bei der Speisewalze 206 seine Auswirkung bei der Abgabe an der Karde erzeugt. Treten diese Massenabweichungen abwechselnd einmal nach oben, bzw. nach unten auf, so hat dies keine grösseren Auswirkungen auf den Füllgrad des Speichers 211. Der Bandspeicher 211 muss lediglich eine genügend grosse Aufnahmekapazität aufweisen. Treten jedoch diese Massenabweichungen in regelmässigen oder unregelmässigen Abständen im wesentlichen in einer Richtung auf, so steht die vorhandene Kapazität des Puffers im Bandspeicher 211 bald an der Grenze.

Um diese Nachteile zu vermeiden und um die benötigte Kapazität des Bandspeichers auf einem Minimum zu halten, wird nun ein Eingriff in die Basisdrehzahl des Antriebsmotors 25 durchgeführt. Sobald, z.B. zum Zeitpunkt T1, die über den Sensor 210 ermittelte Massenabweichung sich ausserhalb eines vorgegebenen Toleranzbereiches To befindet, wird mit einer Zeitverzögerung t auch die Drehzahl des Motors 25 verändert. Aus dem oberen Diagramm ist ersichtlich, dass die Masse kleiner wird, wodurch auch der Verzug im Streckwerk 213 durch Erhöhung der Drehzahl des Eingangswalzenpaares 214 verkleinert werden muss. Wird nun wie im unteren Diagramm in Fig. 8 gezeigt, die Basisdrehzahl des Motors 25 auf U2 abgesenkt, so wird die über den Regelmotor 29 ausgelöste Drehzahlerhöhung gegenüber dem Walzenpaar 215 fast vollständig kompensiert. Dies ist insbesondere aus der Darstellung der unteren zwei Kurven der Fig. 8 zu entnehmen, wobei die untere Kurve die Drehzahlveränderung des Eingangswalzenpaares 214 in Bezug auf eine gleichbleibende Drehzahl des Walzenpaares 215 gezeigt ist. Daraus ist zu entnehmen, dass die zum Zeitpunkt T1 von dem Sensor 210 ertasste Massenverringerung des gelieferten Faserbandes zu einer Erhöhung der Drehzahl U14 der Walze 214 gegenüber dem Walzenpaar 215 führt, um durch Herabsetzung des Verzuges diese Dünnstelle auszugleichen. Befindet sich das Signal des Füllstandssensors 218 noch innerhalb eines vorgegebenen Toleranzbereiches, so wird kein zusätzliches Steuersignal zur weiteren Beeinflussung der Basisdrehzahl erzeugt. Durch die gleichzeitige Herabsetzung der Basisdrehzahl U1 des Motors 25 wird diese Drehzahlveränderung der Walze 214 annähernd kompensiert, d.h. das gesamte Drehzahlniveau des Streckwerks 213 wird durch die antriebsmässige Verknüpfung gleichmässig heruntergefahren, so dass trotz Veränderung des Drehzahlverhältnisses zwischen den Walzenpaaren 214 und 215 die jetzt vorhandene Drehzahl des Eingangswalzenpaares sich etwa wieder auf demselben Niveau befindet, das vor dem Regeleingriff bestanden hat. Dadurch wird ermöglicht, dass die Einzugsgeschwindigkeit des Faserbandes F auch nach einem durchgeführten Regeleingriff und der Veränderung des Drehzahlverhältnisses etwa auf gleichbleibendem Niveau bleibt. Dadurch ist es möglich, dass der Faserbandspeicher 211 lediglich die kurzwelligen Regeleingriffe ausgleichen muss, wobei die langwelligen Abweichungen durch Veränderung der Basisdrehzahl des Motors 25 ausgeglichen werden. Der Sensor 218 dient dabei lediglich als zusätzliche Überwachungshilfe. Aus Übersichtlichkeitsgründen wurde bei der Kurve der Walze 214 auf die Darstellung der Ausschläge, welche durch die kurzwelligen Ausregulierungen entstehen, verzichtet. Diese kurzwelligen Ausregulierungen pendeln in der Regel um die eingezeichnete Kurve nach oben oder unten.

Durch die Absenkung der Basisdrehzahl wird auch die Drehzahl der Antriebselemente der Kannenablage synchron abgesenkt, wodurch das Drehzahlverhältnis zwischen der Lieferwalze 216 und den Kalanderwalzen 234 aufrechterhalten bleibt. Dieser Ausgleich der langweiligen Abdriftungen der Faserbandmasse kann relativ sanft und langsam durchgeführt werden, so dass auch die Nachführung der relativ trägen Elemente der Kannenablage KA keine Probleme bereitet.

Mit der vorgeschlagenen Einrichtung kann einerseits mit bereits bekannten Sensoreinrichtungen rechtzeitig auf langwellige Abweichungen in der Faserbandmasse reagiert werden und andererseits der für die Regulierung am Eingang des Streckwerks benötigte Faserbandspeicher auf einem Minimum gehalten werden.

Es wird nun zusätzlich vorgeschlagen, das Faserband F mit einer Feinheit (Bandnummer) höher als 8 ktex, vorzugsweise zwischen 10 und 12 ktex herzustellen. Dazu muss die Karde nach Fig. 7 eine ausreichend hohe Fasermasse verarbeiten und liefem können, was dadurch realisiert werden kann, dass die Karde mit einer relativ grossen Arbeitsbreite (z.B. grösser als 1200 mm) versehen wird. Eine solche Karde ist als Modell KU 12 ("Superkarde") der Fa. Schubert & Selzer geliefert worden (siehe z.B. das Fachbuch "High Speed Carding and Continuous Card Feeding", Autor: Zoltan S. Szaloki, Seiten 72 bis 75). Eine Alternative ist in CH 2318/97 der Anmelderin erwähnt, wovon der Gesamtinhalt schon als Bestandteil dieser Anmeldung eingefügt worden ist.

Weiter weist das Streckwerk 213 bzw. das Streckwerk 2, Fig. 4, (ob geregelt oder mit fest vorgegebenem Verzug) einen Gesamtverzug GV von mehr als 2 und vorzugsweise 3 bis 6. Dabei kann der mittlere Verzug in einem geregelten (variablen) Verzugsfeld (zwischen den Walzenpaaren 214 und 215 in Fig. 7) z. B. ca. 2,5 betragen, der Verzug im anderen (fest eingestellten) Verzugsfeld (zwischen den Walzenpaaren 215 und 216 in Fig. 7) z.B. ca. 1,2 betragen. In den Varianten nach Fig. 7 und 8 ist das erste Verzugsfeld zum Erzeugen des variablen Verzugs konzipiert. Dies ist aber nicht wesentlich - eine Altemative ist in CH 0153/97 vom 23.1.97 aufgeführt. In dem Fall kann der"Vorverzug" (im ersten Verzugsfeld) ca. 1,1 bis 1,5 (vorzugsweise 1,2) betragen und der "Hauptverzug" (im zweiten, variablen Verzugsfeld) ca. 2,0 bis 4 (vorzugsweise 2,5) betragen.

Die Faserbandstärke am Auslauf des Streckwerks beträgt vorzugsweise 3 bis 5 ktex, beispielsweise 3.5 ktex. Das Streckwerk ist vorzugsweise direkt oberhalb des Trichterrades einer Bandablage angeordnet, beispielsweise wie dies in DE-Gbm-296 22 923 gezeigt wird. Das in der Kanne abgelegte Faserband kann direkt an die OE-Spinnmaschine, beispielsweise nach EP-A-627 509 geliefert werden.

## Patentansprüche

1. Eine Karde bzw. eine Kardiereinrichtung mit einer einrigen faserbandbildenden Einrichtung aus Erzeugung eines Faserbandes, mit einer Bandablage und mit einem Streckwerk zum Vertrecken nur des einzig gebildeten Faserbandes, wobei das Streckwerk zwischen der bandbildenden Einrichtung und der Bandablage angeordnet ist und wobei dem Streckwerk das in der faserbandbildenden Einrichtung erzeugte Faserband zugeführt wird, **dadurch gekennzeichnet, dass** das Streckwerk durch eine Baugruppe einer Strecke zum Doublieren und Verstrecken von mehreren Faserbändern gebildet ist.
Es schließen sich die erteilten Ansprüche 2-14 an.

2. Eine Karde bzw. eine Kardiereinrichtung nach Anspruch 1 **dadurch gekennzeichnet, dass** die Baugruppe ein Streckwerk mit einer Liefergeschwindigkeit höher als 400 m/min umfasst.

3. Eine Karde, bzw. eine Kardiereinrichtung nach einem der vorherigen Ansprüche **dadurch gekennzeichnet, dass** das Streckwerk der Baugruppe als Vergleichmässigungsaggregat gebildet ist.

4. Eine Karde, bzw. eine Kardiereinrichtung nach einem oder mehreren der vorherigen Ansprüche, **dadurch gekennzeichnet, dass** der Vorlagetisch der Strecke mit mindestens einem Bandleitelement für ein einziges Faserband versehen ist.

5. Eine Karde, bzw. eine Kardiereinrichtung nach einem oder mehreren der vorherigen Ansprüche, **dadurch gekennzeichnet, dass** das Streckwerk einen Gesamtverzug von mehr als 2, vorzugsweise mehr als 3 und beispielsweise 3 bis 6 erzeugen kann.

6. Eine Karde, bzw. eine Kardiereinrichtung nach einem oder mehreren der vorherigen Ansprüche, **dadurch gekennzeichnet, dass** diefaserbandbildende Einrichtung zur Erzeugung eines Faserbandes mit einer Bandstärke höher als 8 ktex, beispielsweise 10 bis 12 ktex, ausgelegt ist.

7. Eine Karde, bzw. eine Kardiereinrichtung nach einem oder mehreren der vorherigen Ansprüche, **dadurch gekennzeichnet, dass** die Karde eine Arbeitsbreite höher als 1200 mm, beispielsweise 1300 bis 1500 mm aufweist.

8. Eine Karde, bzw. eine Kardiereinrichtung nach einem oder mehreren der vorherigen Ansprüche, **dadurch gekennzeichnet, dass** das Streckwerk zum Verstrecken eine aus mehreren Faserbändern gebildetem Vlies ausgelegt ist.

9. Eine Karde, bzw. eine Kardiereinrichtung nach Anspruch 9, **dadurch gekennzeichnet, dass** dem Streckwerk Infrastruktureinrichtungen, z. B. Antriebs- bzw. Absaugeinrichtungen, zugeordnetsind, die ebenfalls zum Verstrecken von einem Vlies geeignet sind.

10. Eine Karde, bzw. eine Kardiereinrichtung nach einem oder mehreren der vorherigen Ansprüche, **dadurch gekennzeichnet, dass** das Streckwerk eine Bandablage zugeordnet ist, die zum Durchführen eines fliegenden Kannenwechsels ausgelegt ist.

11. Eine Karde, bzw. eine Kardiereinrichtung nach einem oder mehreren der vorherigen Ansprüche, **dadurch gekennzeichnet, dass** der Antrieb der Elementen der Faserbandbildenden Einrichtung und der Antrieb des Streckwerks der Streckwerkbaugruppe mindestens je einen frequenzgesteuerten Drehstrommotor aufweisen und zum Speisen dieser Motoren ein gemeinsamer Frequenzumrichter vorgesehen sind.

12. Eine Karde, bzw. eine Kardiereinrichtung nach Anspruch 11, **dadurch gekennzeichnet, dass** zwischen dem Frequenzumrichter und dem Drehstrommotor des Streckwerks ein Unterbrecherschalterund ein elektrisches Drosselglied, zum Beispiel Strombegrenzer vorgesehen ist.

13. Eine Karde, bzw. eine Kardiereinrichtung nach Anspruch 12, **dadurch gekennzeichnet, dass** das Drosselglied parallel zu einem weiteren Unterbrecherschalter in die Zuführleitung vom Frequenzumrichter zum Drehstrommotor des Streckwerks angeordnet ist.

14. Eine Karde, bzw. eine Kardiereinrichtung nach Anspruch 12, **dadurch gekennzeichnet, dass** in der Zuführleitung vom Frequenzumrichter zum Drehstrommotor des Streckwerks ein Unterbrecherschalter vorgesehen ist und im Frequenzumrichter Mittel vorgesehen sind, um die Stromabgabe an den Drehstrommotor des Streckwerks zu steuern.

## Claims

1. A card, and/or a carding device with a single sliver-forming device for producing a sliver, a sliver deposition and a drafting unit for drafting only the single sliver which has been formed, wherein the drafting unit is disposed between the sliver-forming device and the sliver deposition, wherein the sliver formed in the sliver-forming device is supplied to the drafting unit, **characterised in that** the drafting unit is made up of a group of structural components of a draw frame for the doubling and drawing of slivers.

2. A card and/or a carding device according to claim 1, ***characterized* in that** the group of structural components comprises a drafting unit with a delivery speed that is higher than 400 m/min.

3. A card, and/or a carding device according to one of the preceding claims, ***characterized* in that** the drafting unit of the group of structural components is formed as an aggregate for equalization.

4. A card, and/or a carding device according to one or several of the preceding claims, ***characterized* in that** the depositing table of the draw frame is provided with at least one sliver guiding component for one single sliver.

5. A card, and/or carding device according to one or several of the preceding claims, ***characterized* in that** the drafting unit can generate a total draft of more than 2, preferably more than 3 and for example 3 to 6.

6. A card, and/or carding device according to one or several of the preceding claims, ***characterized* in that** the sliver-forming device is laid out to produce a sliver with a sliver strength of more than 8 ktex, for example 10 to 12 ktex.

7. A card, and/or carding device according to one or several of the preceding claims, ***characterized* in that** the card comprises a working width that is larger than 1200 mm, for example 1300 to 1500 mm.

8. A card, and/or carding device according to one or several of the preceding claims, ***characterized* in that** the drafting unit is laid out for the drafting of a fleece being formed from several slivers.

9. A card, and/or a carding device according to claim 9, ***characterized* in that** infrastructure facilities are assigned to the drafting unit, e.g. drive means and/or suction devices which are likewise suitable for the drafting of a fleece.

10. A card, and/or carding device according to one or several of the preceding claims, ***characterized* in that** a sliver deposition is assigned to the drafting unit, said sliver deposition being designed to accomplish a can change without interrupting the process.

11. A card, and/or carding device according to one or several of the preceding claims, ***characterized* in that** the drive unit of the components of the sliver-forming device and the drive unit of the drafting unit of the group of structural components of the drafting unit each are provided with at least one frequency-controlled three-phase motor and for the current supply of these motors one common frequency converter is provided.

12. A card, and/or a carding device according to claim 11, ***characterized* in that** between the frequency converter and the three-phase motor of the drafting unit a cut-out switch and an electrical restrictor member are provided, for example a current limiter.

13. A card, and/or a carding device according to claim 12, ***characterized* in that** the restrictor member is arranged parallel to a further cutout switch in the supply line from the frequency converter to the three-phase motor of the drafting unit.

14. A card, and/or a carding device according to claim 12, ***characterized* in that** in the supply line from the frequency converter to the three-phase motor of the drafting unit a cut-out switch is provided and that in the frequency converter means are provided to control the current delivery to the three-phase motor of the drafting unit.

## Revendications

1. Une carte, respectivement un arrangement de cardage, avec un seul arrangement formant un ruban de fibres, pour fabriquer une bande de fibres, une dépose de ruban et un train d'étirage permettant d'étirer seulement la bande formée isolément, dans lequel le train d'étirage est disposé entre le dispositif de formation de bande et la dépose de bande et la bande de fibres fabriquée dans le dispositif de formation de bande est acheminée au train d'étirage,
**caractérisée par le fait que**
le train d'étirage est formé par un sous-groupe utilisé pour le doublage et l'étirage de plusieurs rubans de fibres.

2. Une carde, respectivement un arrangement de cardage, selon revendication 1,
**caractérisée par le fait que**
le sous-groupe comprend un train d'étirage ayant une vitesse de livraison supérieure à 400 m/min.

3. Une carde, respectivement un arrangement de cardage, selon l'une des revendications précédentes,
**caractérisée par le fait que**
le train d'étirage du sous-groupe est formé comme appareil égalisateur.

4. Une carde, respectivement un arrangement de cardage, selon l'une ou plusieurs des revendications précédentes,
**caractérisée par le fait que**
la table d'alimentation du banc d'étirage est pourvue d'au moins un élément de guidage de ruban pour un ruban de fibres individuel.

5. Une carde, respectivement un arrangement de cardage, selon l'une ou plusieurs des revendications précédentes,
**caractérisée par le fait que**
le train d'étirage peut produire un étirage total de plus que 2, de préférence plus que 3 et, à titre d'exemple, de 3 à 6 fois.

6. Une carde, respectivement un arrangement de cardage, selon l'une ou plusieurs des revendications précédentes,
**caractérisée par le fait que**
l'arrangement formant le ruban de fibres est conçu pour la production d'un ruban de fibres ayant une épaisseur de ruban supérieure à 8 ktex, par exemple, 10 à 12 ktex.

7. Une carde, respectivement un arrangement de cardage, selon l'une ou plusieurs des revendications précédentes,
**caractérisée par le fait que**
la carde possède une largeur de travail supérieure à 1200 mm, par exemple, de 1300 à 1500 mm.

8. Une carde, respectivement un arrangement de cardage, selon l'une ou plusieurs des revendications précédentes,
**caractérisée par le fait que**
le train d'étirage est conçu pour l'étirage d'un voile formé par une pluralité de rubans de fibres.

9. Une carde, respectivement un arrangement de cardage, selon revendication 8,
**caractérisée par le fait que**
des arrangements d'infrastructure, par exemple, des arrangements d'entraînement respectivement d'aspiration, sont adjoints au train d'étirage, lesquels sont également appropriés pour l'étirage d'un voile.

10. Une carde, respectivement un arrangement de cardage, selon l'une ou plusieurs des revendications précédentes,
**caractérisée par le fait**
**qu'**une dépose de ruban est adjointe au train d'étirage, laquelle est conçue pour effectuer un changement de pots à la volée.

11. Une carde, respectivement un arrangement de cardage, selon l'une ou plusieurs des revendications précédentes,
**caractérisée par le fait que**
l'entraînement des éléments de l'arrangement formant le ruban de fibres et l'entraînement du train d'étirage du sous-groupe de train d'étirage possèdent, chacun, au moins un moteur à courant triphasé commandé par modulation de fréquence, et un convertisseur de fréquences commun est prévu pour l'alimentation de ces moteurs.

12. Une carde, respectivement un arrangement de cardage, selon revendication 11,
**caractérisée par le fait que**,
un discontacteur et un membre d'étranglement électrique, par exemple un limiteur de courant, sont prévus entre le convertisseur de fréquences et le moteur à courant triphasé du train d'étirage.

13. Une carde, respectivement un arrangement de cardage, selon revendication 12,
**caractérisée par le fait que**
le membre d'étranglement est disposé en parallèle à un autre discontacteur, dans la conduite d'alimentation allant depuis le convertisseur de fréquences vers le moteur à courant triphasé du train d'étirage.

14. Une carde, respectivement un arrangement de cardage, selon revendication 12,
**caractérisée par le fait**
**qu'**un discontacteur est prévu dans la conduite d'alimentation allant depuis le convertisseur de fréquences vers le moteur à courant triphasé du train d'étirage, et que, dans le convertisseur de fréquences, des moyens sont prévus, afin de moduler le débit de courant allant vers le moteur à courant triphasé du train d'étirage.
